Europäisches Patentamt

European Patent Office

Office européen des brevets

(11) Publication number: **0 221 254**
**A2**

# (12) EUROPEAN PATENT APPLICATION

(21) Application number: **86110638.3**

(22) Date of filing: **01.08.86**

(51) Int. Cl.⁴: **H 04 N 9/64**

(30) Priority: **02.08.85 JP 169817/85**

(43) Date of publication of application:
**13.05.87 Bulletin 87/20**

(84) Designated Contracting States:
**DE FR GB**

(71) Applicant: **HITACHI, LTD.**
**6, Kanda Surugadai 4-chome Chiyoda-ku**
**Tokyo 100(JP)**

(72) Inventor: **Ueki, Yukinari**
**Hitachi Mitake-ryo, 1545 Yoshida-cho Totsuka-ku**
**Yokohama-shi Kanagawa-ken(JP)**

(72) Inventor: **Kuroyanagi, Tomomitsu**
**4-17-21, Okamura Isogo-ku**
**Yokohama-shi Kanagawa-ken(JP)**

(72) Inventor: **Matsumoto, Shuzo**
**1-5-25, Katase**
**Fujisawa-shi Kanagawa-ken(JP)**

(72) Inventor: **Kamiya, Masanori**
**652-9, Totsuka-cho Totsuka-ku**
**Yokohama-shi Kanagawa-ken(JP)**

(74) Representative: **Altenburg, Udo, Dipl.-Phys. et al,**
**Patent- und Rechtsanwälte**
**Bardehle-Pagenberg-Dost-Altenburg-Frohwitter &**
**Partner Postfach 86 06 20**
**D-8000 München 86(DE)**

(54) **Color tone adjusting device.**

(57) In order to adjust the hue in a color picture reproduced in response to color difference signals, there is provided a converter for converting a pair of color difference signals to another pair of color difference signals, each pair of color difference signals defining the same color vector in different color vector planes having a common origin. The converter includes first amplifiers which amplify the color difference signals with a gain which varies according to a sine function in response to a common control signal second amplifiers which amplify the color difference signals with a gain which varies according to a cosine function in response to the common control signal, and an adder circuit which adds the outputs of one set of first and second amplifiers and a subtracter circuit which subtracts the outputs of another set of first and second amplifiers.

./...

FIG. I.

## Background of the Invention:

The present invention relates to a color tone adjusting apparatus for a color display device equipped with red (R), green (G), and blue (B) signal input terminals.

Accompanying the recent widespread use of VCRs and personal computers, color television receivers are now changing from those of a single function type which simply receive and produce broadcasted signals into those of a multi-function type equipped with composite color video signal input terminals for VCRs and RGB input terminals for computers, i.e., for receiving R, G, and B signals.

A color television receiver has heretofore been equipped with such functions as hue adjusting (to change the tint) and contrast adjusting (to change the degree of brightness) to adjust the picture quality to adapt to a viewer's liking.

In the case of color television receivers of the conventional NTSC system, the phase of the carrier signal is deviated in order to adjust the hue in the reproduced picture for demodulation, which is in synchronism with the color burst signal of the chrominance subcarrier, that is, the demodulating axis for the chrominance signal in the demodulating circuit is deviated, as described in IEEE Transactions on Consumer Electronics, Vol. CE-21, No. 2, May, 1975, pp. 164-169. However, attention has not been given to adjusting the hue when the signals to be reproduced by the color television receiver are input through the RGB input terminals.

## SUMMARY OF THE INVENTION:

The object of the present invention is to provide a color tone adjusting apparatus which is capable of adjusting the hue even if primary color signals are applied thereto.

To achieve the above-mentioned object according to the present invention, attention is given to the fact that the adjustment of hue is accomplished by turning the vector plane for the color signal around the origin, which vector plane represents colors with the ordinate as (R-Y) and the abscissa as (B-Y), for instance. Namely, the present invention comprises a matrix circuit which converts primary color signals, such as R, G, and B signals, into a pair of two color difference signals, such as (R-Y) and (B-Y) signals, on one color vector plane, a hue adjusting circuit connected to receive the above two color difference signals and a control voltage for producing another pair of two color difference signals on another color vector plane which is equal to said one color vector plane rotated through a rotation angle responsive to said control voltage.

## BRIEF DESCRIPTION OF THE DRAWINGS:

Fig. 1 is a block diagram showing one embodiment of the present invention;

Fig. 2 is a block diagram showing one example of the hue adjusting circuit shown in Fig. 1;

Fig. 3 is a vector diagram showing color difference signals;

Fig. 4 shows characteristics of the control voltage generator shown in Fig. 2;

Fig. 5 is a block diagram showing one example of the internal structure of a control voltage generator;

Figs. 6 and 7 are vector diagrams for explaining the operation of the control voltage generator circuit;

Fig. 8 is a block diagram showing another embodiment of the present invention;

Fig. 9 is a diagram which shows in detail the control voltage generator;

Fig. 10 is a diagram which shows in detail the gain control circuits;

Fig. 11 shows characteristics of the circuit shown in Fig. 9;

Fig. 12 shows the characteristic of the circuit shown in Fig. 10;

Fig. 13 is a block diagram showing another example of control voltage generator;

Fig. 14 shows the characteristic of the circuit shown in Fig. 13;

DESCRIPTION OF THE PREFERRED EMBODIMENTS

The invention will be explained below in conjunction with the drawings.

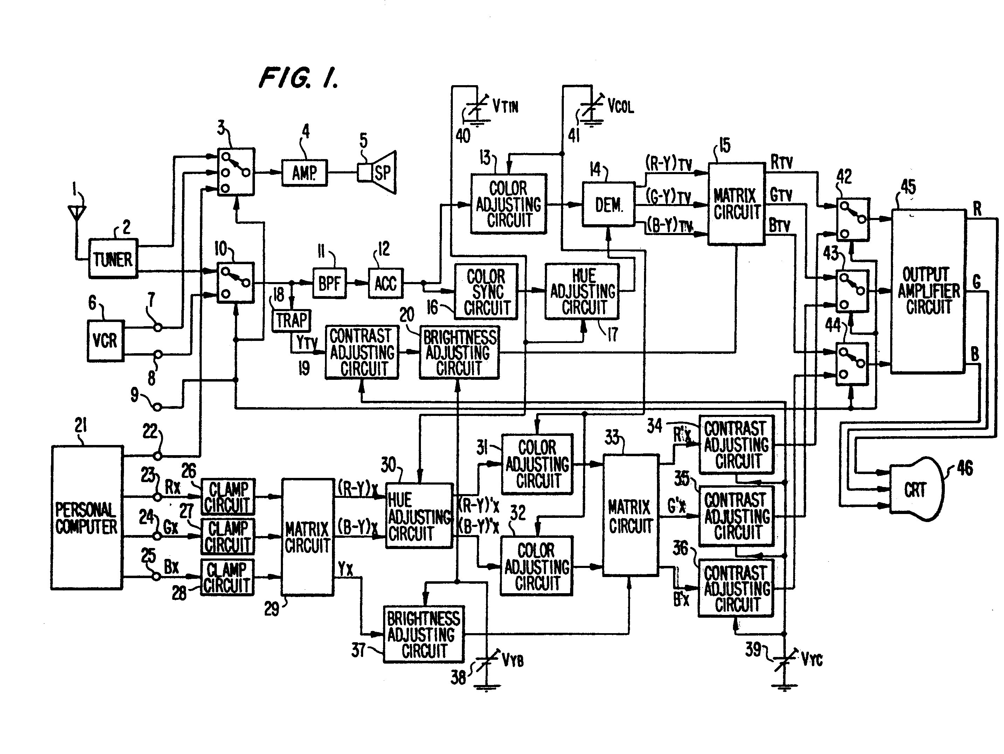

Fig. 1 is a block diagram illustrating an embodiment according to the present invention wherein reference numeral 1 denotes an antenna, 2 denotes a tuner including a video detector and a sound detector which selects any station among the broadcasted signals received by the antenna 1 and which produces a sound signal and a composite color video signal (hereinafter referred to simply as a video signal). A switching circuit 3 switches the sound signal to be produced, an amplifier 4 amplifies the sound signal, and a speaker 4 reproduces the sound.

Reference numeral 6 denotes a VCR having terminals 7 and 8 which receive a sound signal and a video signal produced from the tuner 2 and the VCR 6. Reference numeral 11 denotes a band-pass filter (hereinafter referred to as a BPF) for extracting the chrominance signal from the video signal, 12 denotes a ACC circuit (for automatically adjusting the level of the chrominance signal to a given value), 14 denotes a demodulator which demodulates the chrominance signal to produce three color difference signals $(R-Y)_{TV}$, $(G-Y)_{TV}$ and $(B-Y)_{TV}$, 16 denotes a color synchronizing circuit for generating a carrier signal that is used for demodulating the chrominance signal in the demodulator 14, and 17 denotes hue adjusting circuit which changes the demodulating axis for the chrominance signal in the demodulating circuit 14 by changing the phase of the carrier signal generated by the synchronizing circuit 16.

Reference numeral 18 denotes a trap filter which attenuates only the chrominance signal in the video signal to extract a brightness signal $Y_{TV}$, 19 denotes a contrast adjusting circuit, 20 denotes a brightness adjusting circuit (to adjust the brightness), and 15 denotes a matrix circuit which receives the three color difference signals $(R-Y)_{TV}$, $(G-Y)_{TV}$, $(B-Y)_{TV}$, and the brightness signal $Y_{TV}$ to produce three primary color signals $R_{TV}$, $G_{TV}$ and $B_{TV}$.

Reference numeral 21 denotes a personal computer, 22 denotes a terminal which receives the sound signal produced from personal computer 21, reference numerals 23, 24 and 25 denote input terminals which receive three primary color signals $R_X$, $G_X$, $B_X$ produced from the personal computer, reference numerals 26, 27 and 28 denote clamp circuits (for clamping the input signals to desired DC potentials), 29 denotes a matrix circuit which receives three primary color signals $R_X$, $G_X$, $B_X$ from the clamp circuits 26, 27, 28 to produce two color difference signals $(R-Y)_X$ and $(B-Y)_X$ and a brightness signal $Y_X$, 30 denotes a hue adjusting circuit which receives the two color difference signals $(R-Y)_X'$ and $(B-Y)_X'$, which are obtained as a result of hue adjusting operation, reference numerals 31 and 32 denote color adjusting circuits, 37 denotes a brightness adjusting circuit, 33 denotes a matrix circuit which receives color difference signals $(R-Y)_X'$ from color adjusting circuits 31, 32 and receives brightness signal $Y_X$ from brightness adjusting circuit 37, and which produces three primary color signals $R_X'$, $G_X'$, $B_X'$, and reference numerals 34, 35, 36 denote contrast adjusting circuits.

Reference numerals 42, 43, 44 denote switching circuits for switching the three primary color signals $R_{TV}$, $G_{TV}$, $B_{TV}$

- 6 -

0221254

produced from the matrix circuit 15 and the three primary color signals $R_X'$, $G_X'$, $B_X'$ produced from the matrix circuit 33 via contrast adjusting circuits 34, 35, 36, reference numeral 45 denotes an output amplifier circuit which drives the color cathode-ray tube 46.

Reference numeral 38 denotes a variable voltage source which generates a DC voltage $V_{YB}$ to control brightness adjusting circuits 20 and 37, reference numeral 39 denotes a variable voltage source which generates a DC voltage $V_{YC}$ to control contrast adjusting circuits 19, 34, 35 and 36, reference numeral 40 denotes a variable voltage source which generates a DC voltage $V_{TIN}$ to control the hue adjusting circuits 17 and 30, reference numeral 41 denotes a variable voltage source which generates a DC voltage $V_{COL}$ to control the color adjusting circuits 13, 31 and 32, and reference numeral 9 denotes an input terminal which receives a switching signal to control the switching circuits 3, 10, 42, 43 and 44.

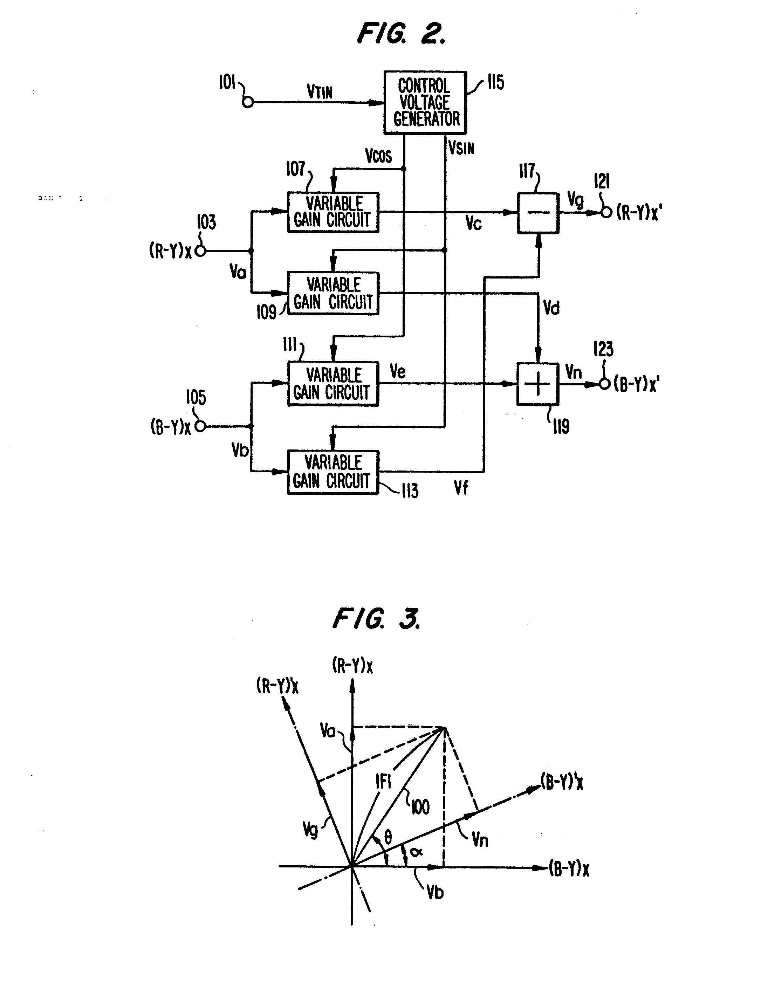

Fig. 2 is a block diagram showing the internal structure of hue adjusting circuit 30 of Fig. 1, and wherein reference numeral 101 denotes an input terminal which receives voltage $V_{TIN}$ as the hue adjusting voltage, reference numerals 103 and 105 denote input terminals which receive color difference signals $(R-Y)_X$, $(B-Y)_X$, reference numerals 107, 109, 111 and 113 denote variable gain circuits, 115 denotes a control voltage generator which generates a gain control voltage Vcos to control the variable gain circuits 107, 111 and a gain

- 7 -

0221254

control voltage Vsin to control the variable gain circuits 109 and 113, reference numeral 117 denotes a subtracter circuit, 119 denotes an adder circuit, and 121 and 123 denote output terminals. The operation of the hue adjusting circuit 30 shown in Fig. 2 will be described below in conjunction with Fig. 3.

The intensity of the color difference signal $(R-Y)_X$ input from the terminal 103 is now denoted by Va, and the intensity of the color difference signal $(B-Y)_X$ input from the terminal 105 is denoted by Vb. On a vector plane in which the ordinate is represented by $(R-Y)_X$ and the abscissa is represented by $(B-Y)_X$, the colors are then represented as vectors having an intensity $|F|$ and an angle $\theta$ relative to the axis $(B-Y)_X$ as shown in Fig. 3, i.e.,

$$Va = |F| \cdot \sin \theta \qquad \ldots \ldots \quad (1)$$

$$Vb = |F| \cdot \cos \eta \qquad \ldots \ldots \quad (2)$$

Hue adjusting involves rotation of the vector plane, that is, vector 100 whose absolute value is $|F|$ $\alpha\nu\phi$ $\delta\eta\rho\sigma\epsilon$ $\alpha\nu\lambda\omega\epsilon$ $\iota\sigma$ $\theta$ shown in Fig. 3 is reproduced as a color wherein blue and red difference signal components are Vb and Va respectively, in a vector plane determined by $(B-Y)_X$ and $(R-Y)_X$, and is also reproduced as a color wherein blue and red difference signal components are Vh and Vg, respectively, in a vector plane determined by $(B-Y)'_X$ and $(R-Y)'_X$, the latter plane being rotated from the former plane with a rotation angle $\alpha$. That is, the intensities of signals Vg and Vh on the axes that are turned on an angle $\alpha$, are given by

$$Vg = |F| \cdot \sin (\theta - \alpha)$$

$$= |F| \cdot (\sin \theta \cdot \alpha - \cos \theta \cdot \sin \alpha) \quad .. \quad (3)$$

$$Vh = |F| \cdot \cos (\theta - \alpha)$$

$$= |F| \cdot (\cos \theta \cdot \alpha + \sin \theta \cdot \sin \alpha) \quad .. \quad (4)$$

If the equations (1) and (2) are substituted for the equations (3) and (4), there are obtained the following equations:

$$Vg = Va \cdot \cos \alpha - Vb \cdot \sin \alpha \qquad ..... \qquad (5)$$

$$Vh = Vb \cdot \cos \alpha + Va \cdot \sin \alpha \qquad ..... \qquad (6)$$

As will be obvious from the above equations (5) and (6), the color difference signals $(R-Y)'_X$ and $(B-Y)'_X$ are respectively obtained by subtracting and adding the input color difference signals $(R-Y)_X$ and $(B-Y)_X$ which have been multiplied by $\cos \theta$ and $\sin \theta$ times at an angle $\alpha$.

The hue adjusting circuit 30 shown in Fig. 2 adjusts the hue according to the above-mentioned method. Namely, the variable gain circuit 107 which receives the color difference signal $(R-Y)_X$ produces an output Vc of which the intensity is controlled by the control voltage Vcos.

Further, the variable gain circuit 109 which receives the color difference signal $(R-Y)_X$ produces an output signal Vd the intensity of which is controlled by the control voltage Vsin generated by the control voltage generator 115, and the variable gain circuit 113 which receives the color difference signal $(B-Y)_X$ produces an output signal Vf the intensity of which is controlled by the control voltage Vsin.

The gains of the variable gain circuits 107, 109, 111 and 113 are linearly changed in response to control voltages applied thereto, within a range between +1 and -1.

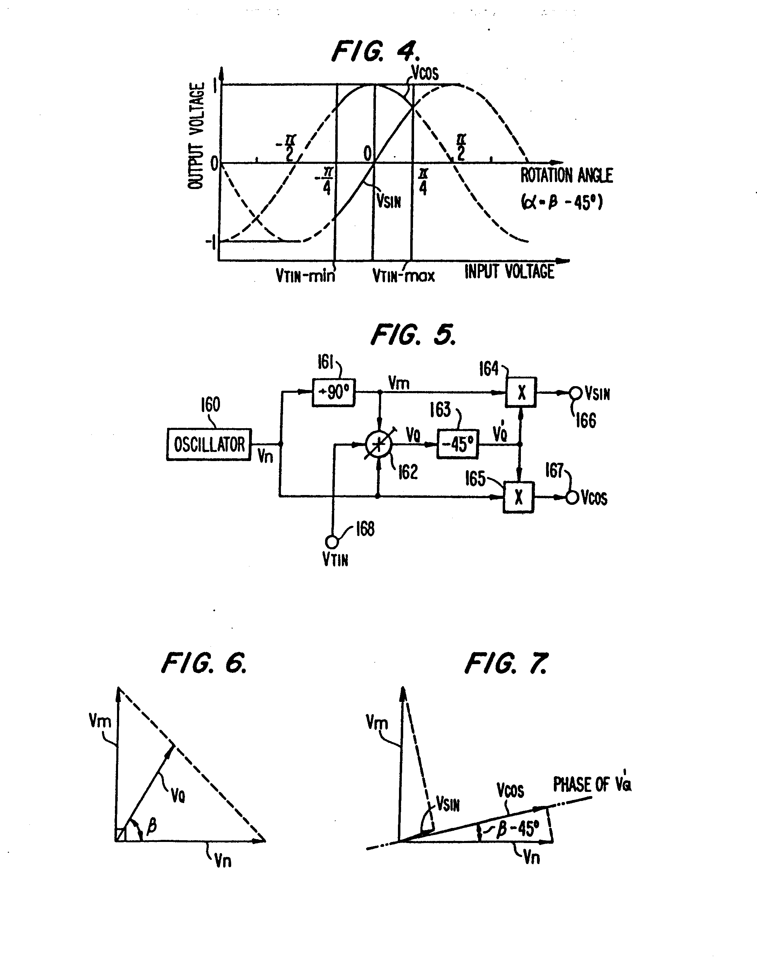

Responsive to the voltage $V_{TIN}$, the control voltage generator 115 produces a control voltage Vcos that varies in compliance with a cosine function curve, and produces a control voltage Vsin that varies in compliance with a sine function curve, as shown in Fig. 4.

Therefore, the output Vc from the variable gain circuit 107 is equal to the first term on the right side of the equation (5), the output Vd from variable gain circuit 109 is equal to the second term on the right side of equation (6), the output Ve from variable gain circuit 111 is equal to the first term on the right side of equation (6), and the output Vf from variable gain circuit 113 is equal to the second term on the right side of equation (5). Accordingly, the output Vg from subtracter circuit 117 is given by the equation (5) and output Vh from adder circuit 119 is given by equation (6).

As described above, the hue adjusting circuit 30 produces two color difference signals $(R-Y)'_X$ and $(B-Y)'_X$ that are adjusted in hue from color difference signals $(R-Y)_X$ and $(B-Y)_X$ input thereto. Namely, the color television receiver described in this embodiment is capable of adjusting the hues even when the three primary color signals Rx, Gx, Bx are input.

Fig. 5 is a block diagram which illustrates the structure of control voltage generator 115 shown in Fig. 2, and wherein reference numeral 160 denotes an oscillator, 161 denotes a phase shifting circuit which shifts the output Vn from oscillator 160 by +90 degrees, 168 denotes an input terminal which receives voltage $V_{TIN}$, 162 denotes an adder circuit for adding the output Vm from phase shifting circuit 161 and the output Vn from oscillator 160 with the ratio for addition in responsive to voltage $V_{TIN}$, reference numeral 163 denotes a phase shifting circuit which shifts the phase of the output $V_Q$ from adder circuit 162 by -45 degrees, 164 denotes a multiplier circuit which multiplies output VM by output $V'_Q$ to produce control voltage Vsin at output terminal 166, 165 denotes a multiplier circuit which multiplies output Vn by output $V'_Q$ to produce the control voltage Vcos at output terminal 167.

The operation of the control voltage generator circuit 115 shown in Fig. 5 will be described below in conjunction with Figs. 6 and 7.

The signal Vn produced from oscillator 160 and the signal Vm produced from phase shifting circuit 161 have a phase difference of 90 degrees relative to each other, and have the same intensity which is set to be 1. The signals Vn and Vm are added together by the adder circuit 162. In this case, the ratio of addition is controlled by voltage $V_{TIN}$ as given by

$$K \cdot |Vn| + (1 - K) \cdot |Vm| = 1$$

where K denotes a parameter responsive to voltage $V_{TIN}$ ($0 \leq K \leq 1$).

As shown in Fig. 6, therefore, the output $V_Q$ from adder circuit 162 moves along a straight line that connects Vm and Vn, depending upon the voltage $V_{TIN}$. Here, it is presume that the output $V_Q$ has a phase that is deviated by $\beta$ from the phase of the output Vn are detected in multiplier circuits 164 and 165 are given, from Fig. 7, by

$$Vsin = |Vm| \cdot \sin (\beta - 45°) \quad \ldots \ldots \quad (7)$$
$$Vcos = |Vn| \cdot \cos (\beta - 45°) \quad \ldots \ldots \quad (8)$$

Thus, responsive to a change in the voltage $V_{TIN}$, angle $\beta$ is changed so that the output Vsin changes in compliance with a sine function curve and the output Vcos changes in compliance with a cosine function curve. Since $\beta$ changes within a range between 0° and 90° ($\beta - 45°$) changes within a range −45° and +45°ε υθεοεξοοε, ιξ οετκοξτε vo υθε χομναηε $X_{TIΞ}$, voltages Vsin and Vcos can be changed along the solid lines shown in Fig. 4.

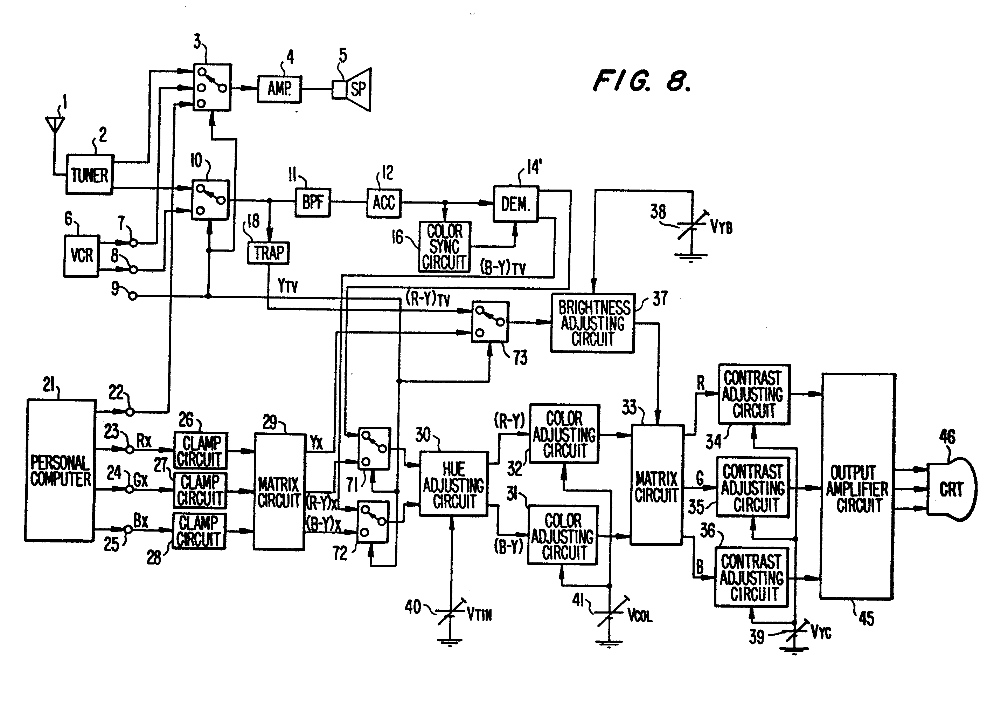

Fig. 8 is a block diagram of the color tone adjusting device according to another embodiment of the present invention, wherein the same elements as those of Fig. 1 are denoted by the same reference numerals. In Fig. 8, reference numeral 14' denotes a demodulator which demodulates the chrominance signal to produce two color difference signals $(R-Y)_{TV}$, $(B-Y)_{TV}$ and $(R-Y)_X$, $(B-Y)_X$, respectively, and 73 denotes a switching circuit for switching the brightness signals $Y_{TV}$ and $Y_X$.

This embodiment is different from that shown in Fig. 1 with respect to the following point. That is, there are two adjustment circuits, one of which is for the signal from tuner 2 or VCR 6, and the other of which is for the signal from personal computer 21 in the first embodiment.

According to the second embodiment on the other hand, there is provided one adjustment circuit which can process both signals. This makes it possible to simplify the construction of the color television receiver.

Furthermore, since in this embodiment the hue is adjusted by relying upon the two color difference signals, demodulated at demodulator 14', it is possible to adjust the hue even in those cases in which the hue could not be adjusted by changing the demodulation axis, such as in the color television receiver for the conventional SECAM system in which the chrominance signals had been frequency-modulated.

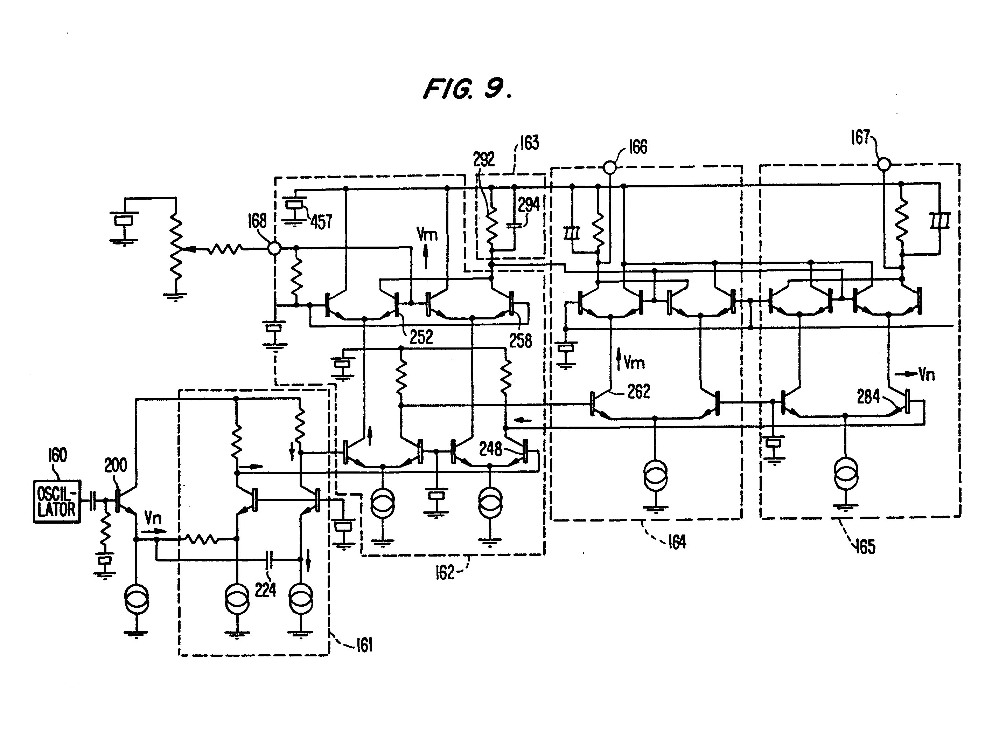

Fig. 9 is a detailed circuit diagram for the control voltage generator 115 shown in Fig. 5. If the signal at the emitter of transistor 200 is assumed to be Vm, the phase of the collector current of transistor 284 in multiple circuit 165 is the same as that of signal Vm, because the phase of signal Vm is inverted by transistor 248 in adder circuit 162 and inverted again by transistor 284. Since the phase Vm is delayed by 90° by capacitor 224 and inverted by transistor 110 in multiplier circuit 164, the phase of the collector current of the transistor 262 is advanced by 90° with respect to that of the collector current of transistor 284. The phase of the collector current of transistor 252 is equal to that of the collector current of the transistor 262, which corresponds to that of signal Vm and the amplitude of collector current of transistor 252 is responsive to voltage $V_{TIN}$ supplied to terminal 168. Also the phase of the collector current of transistor 258 is equal to that of the collector current of transistor 284, which corresponds to that of signal Vm and the amplitude of the collector current of transistor 258 is responsive to the voltage $V_{TIN}$, but the changes which occur in these two collector currents are differential. Therefore, added signal $V_Q$ is produced at a junction point of the collectors of transistors 252 and 258. However, since phase shifting circuit 163 comprising resistor 292 and capacitor 294 operates as a common load to transistors 252 and 258 to delay the phase of the signal at the junction point by -45°, the signal at the junction point is signal $V_Q'$. The phase of signal $V_Q'$ can be changed in the range between -45° and +45°, because the phase of the signal $V_Q$ can be changed in the range between 0° and 90°. The circuit configurations for adding circuit 16 and multiplier circuits 164 and 165 are similar to those shown in the aforementioned article.

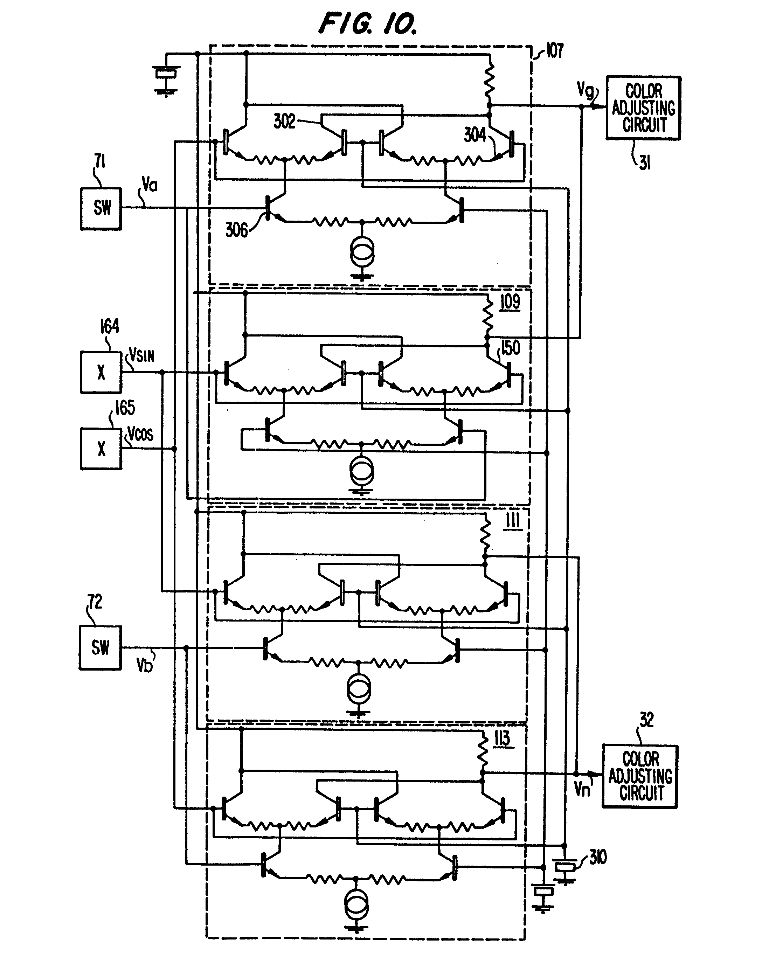

Fig. 10 is a detailed circuit diagram for the variable gain circuits 107, 109, 111 and 113 shown in Fig. 2. The configuration of each circuit is the same and is well known. For instance, in circuit 107 the summed collector currents of transistors 302 and 304 are responsive to a base current of transistor 306.

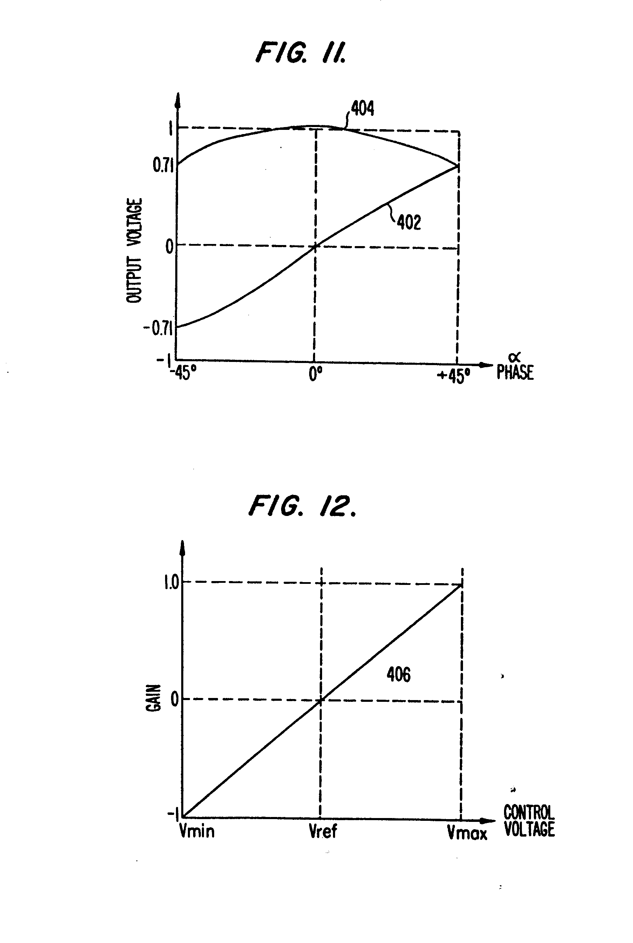

Fig. 11 shows characteristics of control voltage generator circuit 115 shown in Fig. 9, wherein the abscissa represents the phase shifting amount of the shifting circuit 162, and the ordinate presents control voltages appearing at the terminals 166 and 167. A curve 402 represents the voltage Vcos appearing at the terminal 166, and a curve 404 represents the voltage Vsin appearing at the terminal 167. The voltage 402 varies in proportion to sin $\alpha$ and the voltage 404 varies in proportion to cos $\alpha$ for the phase shifting amount $\alpha$.

Fig. 12 shows the characteristics of the gain control circuits 107 and 113 shown in Fig. 10, and wherein the abscissa represents the control voltage and the ordinate represents the gain. A line 406 represents the transmission characteristics, and the gain will become zero when the control voltage is the same as the reference voltage Vref of the d-c voltage source 310 in Fig. 10.

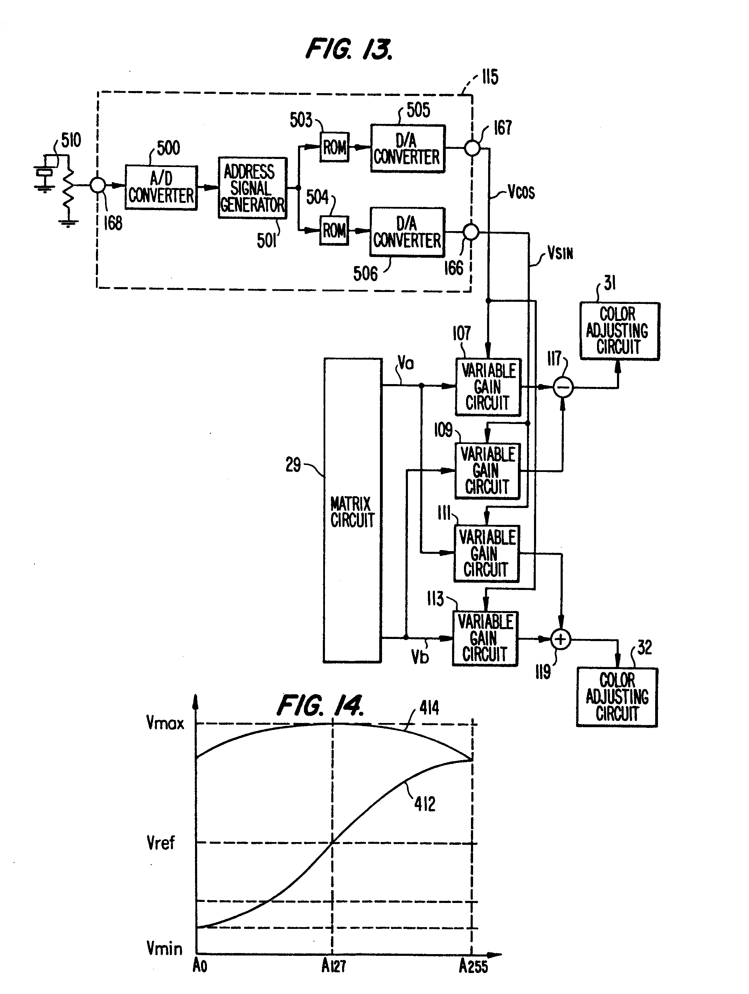

Fig. 13 is a block diagram showing another control voltage generator circuit, wherein the portions having the same function as those of Fig. 1 are denoted by the same reference numerals. In Fig. 13, reference numeral 500 denotes an analog-to-digital converter (hereinafter referred to as an A/D converter), 501 denotes an address signal generator, 503 and 504 denote ROM's (read only memories), and 505 and 506 denote digital-to-analog converters (hereinafter referred to as D/A converters). A voltage applied to a terminal 168 is encoded by the A/D converter 500. The address generator 501, generates address signals that correspond to the encoded value from A/D converter 500. The data to be written in ROM's 503 and 504 is selected from the values which make a desired Vcos or Vsin curve. Therefore, the voltages at terminal 166,167 change along curves 412 and 414 shown in Fig. 14.

Fig. 14 is a diagram showing the relationship between the address signals and control voltages wherein the abscissa represents address signals and the ordinate represents control voltages. A curve 412 represents a control voltage Vsin and a curve 414 represents a control voltage Vcos.

| Voltage on terminal(68) (V) | Address signals | | | | | | | | Data of ROM 503 | | | | | | | | Data of ROM 504 | | | | | | | |
|---|---|---|---|---|---|---|---|---|---|---|---|---|---|---|---|---|---|---|---|---|---|---|---|---|
| | $A_7$ | $A_6$ | $A_5$ | $A_4$ | $A_3$ | $A_2$ | $A_1$ | $A_0$ | $D_7$ | $D_6$ | $D_5$ | $D_4$ | $D_3$ | $D_2$ | $D_1$ | $D_0$ | $D_7$ | $D_6$ | $D_5$ | $D_4$ | $D_3$ | $D_2$ | $D_1$ | $D_0$ |
| 0 | 0 | 0 | 0 | 0 | 0 | 0 | 0 | 0 | 1 | 1 | 0 | 1 | 1 | 0 | 1 | 0 | 0 | 0 | 0 | 0 | 0 | 0 | 0 | 0 |
| 0.04 | 0 | 0 | 0 | 0 | 0 | 0 | 0 | 1 | 1 | 1 | 0 | 1 | 1 | 0 | 1 | 1 | 0 | 0 | 0 | 0 | 0 | 0 | 0 | 1 |
| 0.08 | 0 | 0 | 0 | 0 | 0 | 0 | 1 | 0 | 1 | 1 | 0 | 1 | 1 | 1 | 0 | 0 | 0 | 0 | 0 | 0 | 0 | 0 | 1 | 0 |
| 0.12 | 0 | 0 | 0 | 0 | 0 | 0 | 1 | 1 | 1 | 1 | 0 | 1 | 1 | 1 | 0 | 0 | 0 | 0 | 0 | 0 | 0 | 0 | 1 | 0 |
| 0.16 | 0 | 0 | 0 | 0 | 0 | 1 | 0 | 0 | 1 | 1 | 0 | 1 | 1 | 1 | 0 | 1 | 0 | 0 | 0 | 0 | 0 | 0 | 1 | 1 |
| 0.2 | 0 | 0 | 0 | 0 | 0 | 1 | 0 | 1 | 1 | 1 | 0 | 1 | 1 | 1 | 0 | 1 | 0 | 0 | 0 | 0 | 0 | 1 | 0 | 0 |
| ⋮ | | | | | | | | | | | | | | | | | | | | | | | | |
| 5.0 | 0 | 1 | 1 | 1 | 1 | 1 | 1 | 1 | 1 | 1 | 1 | 1 | 1 | 1 | 1 | 1 | 0 | 1 | 1 | 1 | 1 | 1 | 1 | 1 |
| ⋮ | | | | | | | | | | | | | | | | | | | | | | | | |
| 9.88 | 1 | 1 | 1 | 1 | 1 | 1 | 0 | 0 | 1 | 1 | 0 | 1 | 1 | 1 | 0 | 0 | 1 | 1 | 1 | 1 | 1 | 1 | 0 | 1 |
| 9.92 | 1 | 1 | 1 | 1 | 1 | 1 | 0 | 1 | 1 | 1 | 0 | 1 | 1 | 1 | 0 | 0 | 1 | 1 | 1 | 1 | 1 | 1 | 0 | 1 |
| 9.96 | 1 | 1 | 1 | 1 | 1 | 1 | 1 | 0 | 1 | 1 | 0 | 1 | 1 | 0 | 1 | 1 | 1 | 1 | 1 | 1 | 1 | 1 | 1 | 0 |
| 10 | 1 | 1 | 1 | 1 | 1 | 1 | 1 | 1 | 1 | 1 | 0 | 1 | 1 | 0 | 1 | 0 | 1 | 1 | 1 | 1 | 1 | 1 | 1 | 1 |

- 17 -

0221254

The above table shows the data that is to be written into ROM's 503 and 504. The values of data correspond to the case when the d-c voltage source 510 has a voltage of 10 volts. Described below is the case where the address signal consists of eight bits and the data signal consists of eight bits. As required, however, the number of bits can be increased or decreased.

When the voltage applied to terminal 168 is zero volt, sin -45° volt (-0.71 volt) is produced at terminal 166 and cos -45° volt (0.71 volt) is produced at terminal 167. When the voltages applied to terminal 168 is 5 volts, sin 0° volt (0 volt) is produced at terminal 166 and cos 0° volt (1 volt) is produced at terminal 167. When the voltage applied to the terminal 168 is 10 volts, sin 45° volt (0.71 volt) is produced at terminal 166 and cos 45° volt (0.71 volt) is produced at terminal 167. The D/A convertor 506 has a conversion gain that is 0.707 times as great as the conversion gain of the D/A converter 505. The reason for this is to obtain control voltages which are shown in Fig. 14, when the data signals $D_0$ to $D_7 = 0$ are changed to $D_0$ to $D_7 = 1$, that is, both curves 412 and 414 have the same absolute value at addresses $A_0$ and $A_255$.

CLAIMS

1. A color tone adjusting apparatus comprising:

color signal means for generating a pair of color difference signals each of which appears as one component on a respective one of a pair of perpendicular axis in a first vector plane;

converter means connected to receive said pair of color difference signals for generating a pair of modified color difference signals each of which appears as one component on a respective one of a pair of perpendicular axis in a second vector plane, said second vector plane corresponding to said first vector plane rotated around the origin with an angle of rotation which is indicated by a received control voltage;

control means for supplying to said converter means an adjustable voltage as said control voltage; and

reproducing means connected to receive said pair of modified color difference signals from said converter means for reproducing a color picture.

2. A color tone adjusting apparatus in accordance with claim 1, wherein said converter means comprises:

first and second amplifier means each for amplifying one of said pair of color difference signals with a gain which varies according to a cosine function;

third and fourth amplifier means each for amplifying the other one of said pair of color difference signals with a gain which varies according to a sine function;

- 2 -

0221254

adder means for adding the outputs of said first and third amplifier means to produce one of said pair of modified color difference signals; and

subtracter means for subtracting the outputs of said second and fourth amplifier means to produce another of said pair of modified color difference signals.

3. Color true adjusting apparatus according to claim 2, wherein each of said first and second amplifier means comprises an amplifier whose gain changes linearly in response to a control signal supplied thereto and cosine voltage generator means responsive to an adjustable voltage for producing said control signals which changes along a cosine curve in response to the change of said adjustable voltage; and

wherein each of said third and fourth amplifier means comprises an amplifier whose gain changes linearly in response to another control signal supplied thereto and sine voltage generator means responsive to said adjustable voltage for producing said another control signal which changes along a sine curve in response to changes of said adjustable voltage.

4. Color tone adjusting apparatus comprising:

a first signal source providing a first color difference signal;

first and second amplifier means each for amplifying said first color difference signal with a gain which varies according to a cosine function;

a second signal source providing a second color difference signal;

third and fourth amplifier means each for amplifying said second color difference signal with a gain which varies according to a sine function;

adder means for adding the outputs of said first and third amplifier means;

subtracter means for subtracting the outputs of said second and fourth amplifier means;

reproducing means for reproducing a color picture from the outputs of said adder means and said subtracter means; and

control means for controlling said gains of said first, second, third and fourth amplifier means.

5.    Color tone adjusting apparatus according to claim 4, wherein each of said first and second amplifier means comprises an amplifier whose gain changes linearly in response to a control voltage supplied thereto and cosine voltage generator means supplied with a DC voltage which changes linearly, for producing said control voltage which changes along a cosine curve in response to a change of said DC voltage;

- 4 -

wherein each of said third and fourth amplifier means comprises another amplifier whose gain changes linearly in response to another control voltage supplied thereto and sine voltage generator means supplied with said DC voltage for producing said another control voltage which changes along a sine curve in response to a change of said DC voltage, and wherein said control means produces said DC voltage whose value is adjustable.

6. Color picture reproducing apparatus comprising:

a color signal source providing three primary color signals;

first matrix means coupled to said color signal source for producing one pair of color difference signals and a luminance signal;

converter means connected to receive said one pair of color difference signals for producing a pair of modified color difference signals;

second matrix means supplied with said pair of modified color difference signals and said luminance signal for producing three modified primary color signals; and

display means for producing a color picture in response to said three modified primary color signals.

FIG. I.

1/8

0221254

# FIG. 2.

# FIG. 3.

## FIG. 4.

## FIG. 5.

## FIG. 6.

## FIG. 7.

**F I G. 8.**

0221254

FIG. 9.

## FIG. 10.

## FIG. II.

## FIG. 12.

0221254

## FIG. 13.

## FIG. 14.